(19) Europäisches Patentamt

European Patent Office

Office européen des brevets

(11) **EP 1 282 324 B1**

(12) **EUROPEAN PATENT SPECIFICATION**

(45) Date of publication and mention
of the grant of the patent:
**01.03.2006 Bulletin 2006/09**

(51) Int Cl.:
**H04Q 7/38** (2006.01)

(21) Application number: **01402102.6**

(22) Date of filing: **03.08.2001**

(54) **A radio telecommunications system and method of operating the same with optimized AGPRS resources**

Ein Funktelekommunikationssystem und Verfahren dasselbe zu nutzen mit optimiertem AGPRS Mitteln

Système de télécommunication par radio et son méthode d'exploitation avec ressources optimalisées d'AGPRS

(84) Designated Contracting States:
**AT BE CH CY DE DK ES FI FR GB GR IE IT LI LU MC NL PT SE TR**

(43) Date of publication of application:
**05.02.2003 Bulletin 2003/06**

(73) Proprietor: **Nortel Networks Limited
St.Laurent, Quebec H4S 2A9 (CA)**

(72) Inventors:
• **Cayla, Stéphane**
**78220 Viroflay (FR)**

• **De Lannoy, Arnoud**
**78000 Versailles (FR)**
• **Le Coz, Joseph**
**75015 Paris (FR)**

(74) Representative: **Bird, William Edward et al
Bird Goen & Co.,
Klein Dalenstraat 42A
3020 Winksele (BE)**

(56) References cited:
**WO-A-01/24553          WO-A-01/50790**

**Description**

The present invention relates to wireless telecommunication networks, e.g. those supporting packet switched data and particularly those using GPRS and/or GPRS/EDGE protocols as well as methods of operating the networks and network elements for use with such a network

**TECHNICAL BACKGROUND**

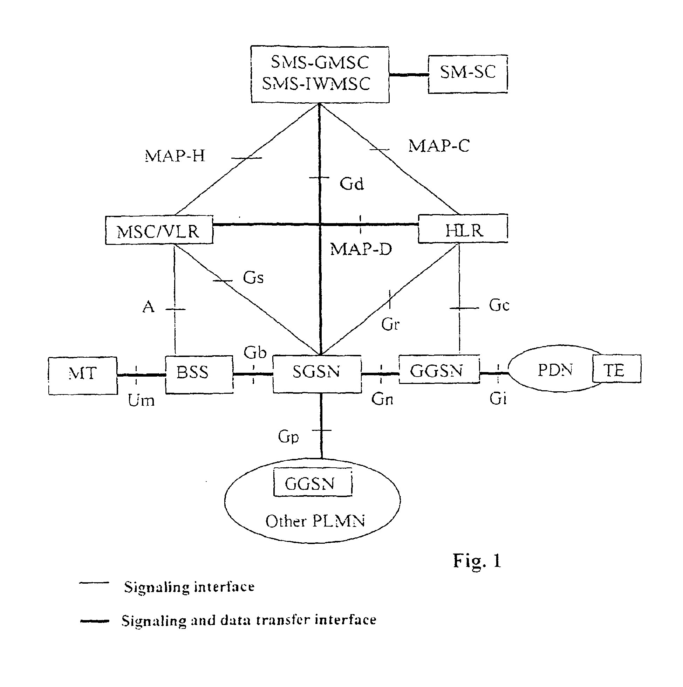

Traditionally, radio telecommunication systems have been designed almost exclusively for voice or for packet data. The delay or latency requirements, the bursty nature of communications and the asymmetry of the traffic in both cases are so different that separate designs are often proposed for the two different types of transmissions. Generally, voice allows only short delays whereas packet data transmissions can be very asymmetrical (e.g. a browser communicating with websites over the Internet) and is often delay tolerant. There have been several attempts to design systems to provide both data and voice in the same system. One such proposal is the combination of the GSM mobile telephone system and the ETSI General Packet Radio Service (GPRS) which is an overlay network on the circuit switched GSM system. A GPRS architecture proposed by ETSI in Technical Specification 3.6 is shown in Fig. 1. Shown mainly on the left of the diagram is a conventional GSM mobile telephone system for full duplex voice communications comprising a Mobile Switching Centre (MSC) a Base Station System (BSS) usually including a Base Station Controller (BSC) and a Base Transceiver Station (BTS), and a mobile terminal (MT) and a Home Location Register (HLR). Packet data services are limited to the Short Message Service (SMS) which is dealt with by an SMS Gateway Mobile Switching Centre (SMS-GMSC) and a Short Message Service Centre (SM-SC). Fax is dealt with as in an ordinary telephone system, e.g. via suitable modems and an Intenvorking Function (IWF) fax data is transmitted via circuit switching. GPRS adds two new nodes to such a system, namely the Serving GPRS Support Node (SGSN) and the Gateway GPRS Support node (GGSN), both of which may be seen as routers. The SGSN contains the identity of MT in its routing tables which are inserted when the MT registers with the network. The GGSN is connected to other data carrying networks, for example a Packet Data network (PDN), for the receipt and transmission of packets of data. As the GPRS system is in parallel to the GSM system information about change of location of the MT is also sent to the SGSN/GGSN.

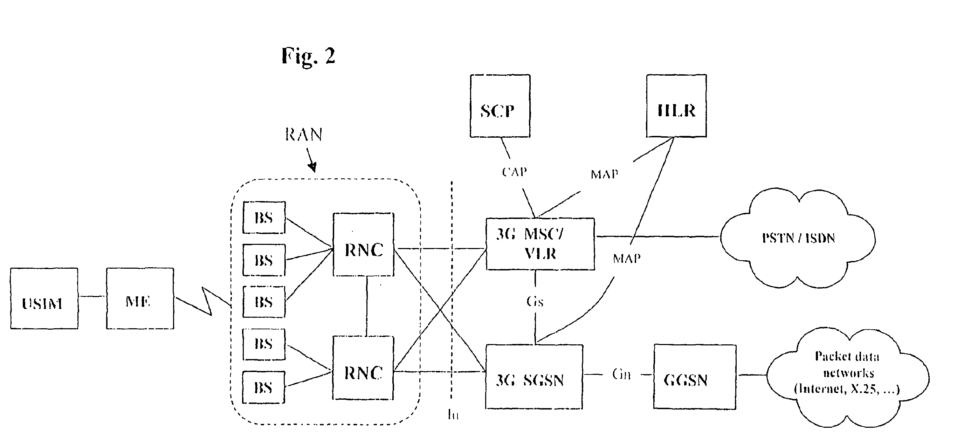

The above hybrid system may be adapted to a Third Generation Mobile Telephone system such as the UMTS system as shown schematically in Fig. 2. Further details of such an implementation may be found in the book by Ojanperå and Prasad, "Wideband CDMA for Third Generation Mobile Communications", Artech House Publishers, 1998. Basically, the Radio Access Network (RAN) provides the network-side equipment for communicating with the MT. A GPRS SGSN and a UMTS MSC are provided in parallel between the RAN and the relevant network, i.e. or a PDN or a Public Service Telephone Network (PSTN), respectively.

GPRS provides a connectionless support for data transmission. However, in order to use the scarce resources on the radio air interface between the BTS and the MT, a circuit switched radio resource allocation is used. Thus, although the networks attached to the GGSN may operate in a completely connectionless way, the transmission of the data packets across the air interface makes use of conventional timeslot and frame management. Accordingly, at some position in the GPRS network a packet handler is required which prepares the packets for transmission in frames across the air interface and receives the frames from the air interface and prepares them for transmission to the data network. This unit may be called a Packet Control Unit (PCU) and may be placed at several alternative positions, e.g. in the Base Transceiver Station (BTS), in the Base Station Controller (BSC) or between the BSC and the SGSN. Generally, the PCU may be assigned to some part of the BSS - the base station system. Typically frame relay will be used between the PCU and the SGSN. The PCU is responsible for receiving data from the SGSN and segmenting this into blocks which are suitable for transmission over the air interface of a base transceiver station and for assembly blocks received from the BSC for transmission to the SGSN.

When the PCU is located between the BSC and the SGSN, the interface therebetween is called the Agprs interface. This interface concentrates packet switched data coming from/going to the BTS via the Abis interface between the BSC and the BTS. Traffic on the Agprs interface is usually controlled statically by the BSC. However, a static control does not provide an optimized use of the transmission capacity between the PCU and the BSC.

Enhanced Data Rates for Global Evolution (EDGE) is a further development of GPRS. Using a modified modulation raw bit rates up to 61.7 kbit/s per physical channel can be obtained on the air interface. If a mobile terminal uses all 8 channels a total bandwidth per communication is 8 x 61.7 kbit/s but due to header overhead the actual net rate is less. EDGE can be applied to GSM and T136 standards and can be implemented in 3G networks as a GSM/EDGE Radio Access Network (GERAN) parallel to the Radio Access Network of a broadband 3G mobile telecommunications network. The provision of variable bandwidth packet switched services places additional requirements on the landline network with respect to packet delay, system throughput and channel utilization.

WO01/24553 describes a method of allocating transmission channels on the Abis interface, i.e. the interface between the base station controller and base stations, of a packet cellular radio network.

It is an object of the present invention to provide a mobile radio telecommunications network supporting packet switched data and a method of operating the same which makes more efficient use of resources.

It is a further object of the present invention to provide network elements for use in a mobile radio telecommunications network supporting packet switched data and a method of operating the same which makes more efficient use of resources.

## SUMMARY OF THE INVENTION

The present invention may provide a mobile cellular radio telecommunications network for switching packet data between user terminals and a data network, the network comprising: a base station controller for controlling at least a first and a second base station, each base station including at least one radio transceiver, a packet controller, an interface located between the base station controller and the packet controller, and a resource control means for dynamically controlling the provision of traffic resources across the interface in accordance with loads on the first and second base stations. The base station may be provided for receiving and transmitting both voice and data traffic. The resource control means may be located in the base station controller or partly in the base station controller and partly in the packet controller. The network may also comprise means for determining the traffic load on each base station and for providing the resource control means with this information. The load determining means may be located in the packet controller. The resource control means may also include means for controlling the resources based on a Quality of Service (QoS) requirement in addition to the loads.

The present invention may also include a method of operating a mobile cellular radio telecommunications network for switching packet data between user terminals and a data network, the network comprising a base station controller for controlling at least a first and a second base station, each base station including at least one radio transceiver; a packet controller and an interface located between the base station controller and the packet controller, the method comprising: transferring data packets over the interface for both the first and second base stations and dynamically controlling the provision of traffic resources across the interface in accordance with loads on the first and second base stations.

The present invention also includes a packet controller for use in a mobile cellular radio telecommunications network for switching packet data between user terminals and a data network, the network comprising a base station controller for controlling at least a first and a second base station, each base station including at least one radio transceiver; and an interface located between the base station controller and the packet controller over which traffic for both the first and second base stations is transferred, wherein the packet controller transmits to and receives from the base station controller data packets and comprises means for dynamically initiating the provision of traffic resources across the interface in accordance with loads on the first and second base stations.

The present invention also includes a method of operating a packet controller for use in a mobile cellular radio telecommunications network for switching packet data between user terminals and a data network, the network having a base station controller for controlling at least a first and a second base station, each base station including at least one radio transceiver; and an interface located between the base station controller and the packet controller, the method comprising: transmitting to and receiving from the base station controller data packets over the interface; and dynamically initiating the provision of traffic resources across the interface in accordance with loads on the first and second base stations. The method also includes the step of calculating the load on each base station

The present invention also includes a base station controller for use in a mobile cellular radio telecommunications network for switching packet data between user terminals and a data network and an interface located between the base station controller and a packet controller, the base station controller controlling at least a first and a second base station, each base station including at least one radio transceiver, the base station controller comprising means for dynamically allocating traffic resources across the interface in accordance with a request from the packet controller.

The present invention also includes a method of operating a base station controller for use in a mobile cellular radio telecommunications network for switching packet data between user terminals and a data network and an interface located between the base station controller and a packet controller, the base station controller controlling at least a first and a second base station, each base station including at least one radio transceiver, the method comprising dynamically allocating traffic resources across the interface in accordance with a request from the packet controller.

The present invention will now be described with reference to the following drawings.

## BRIEF DESCRIPTIONS OF THE DRAWINGS

Fig. 1 is a schematic representation of a GPRS system combined with a GSM mobile telephone system.
Fig. 2 is a schematic representation of a GPRS system incorporated in a Third generation mobile telephone system.

Fig. 3 is a schematic representation of a detail of a packet data system in accordance with the present invention.

Fig. 4 is a message flow in accordance with an embodiment of the present invention.

Fig. 5 is a method flow in accordance with an embodiment of the present invention.

Fig. 6 is a method flow in accordance with an embodiment of the present invention representing the actions to decide whether a joker or a main time slot are removed from the least loaded cell.

Fig. 7 is a method flow in accordance with an embodiment of the present invention representing the actions to decide whether a joker or a main time slot are added to the most loaded cell.

## DESCRIPTION OF THE ILLUSTRATIVE EMBODIMENTS

The present invention will be described with reference to certain embodiments and with reference to certain drawings but the present invention is not limited thereto but only by the claims. In particular the present invention will mainly be described with reference to cellular mobile telephone systems.

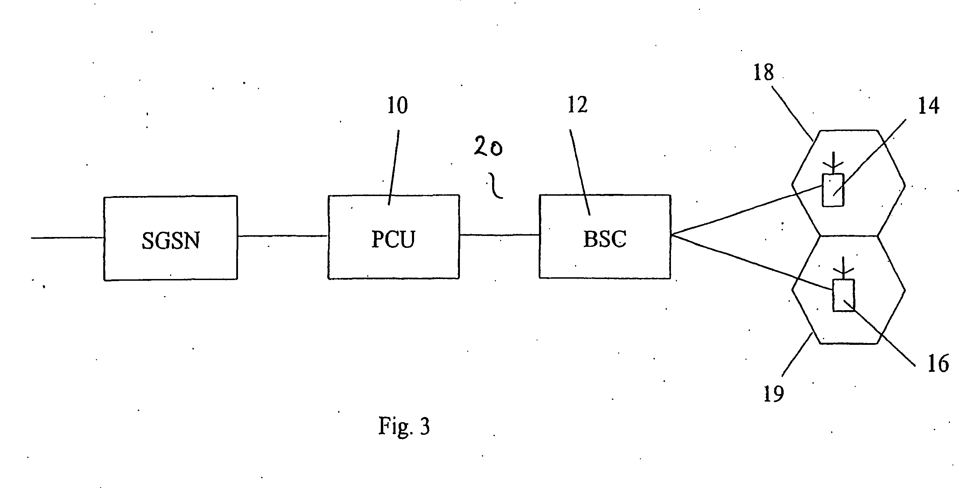

A network useful with the present invention may be as described with reference to Figs. 1 and 2 above with the addition of the functionality as described below which is specific to the present invention. A detail of such a network is shown in Fig. 3 and comprises a PCU 10, a BSC 12 remote from the PCU, at least two base stations 14, 16 controlled by the BSC 12, each base station 14, 16 being located in a separate cell 18, 19 and an interface 20 between the PCU 10 and the BSC 12. Alternatively, the base stations 14, 16 may be located in different sectors of a sectorized cell or in the same cell, the PCU may be co-located with the SGSN.

The present invention relates to the way resources are managed between the PCU 10 and the BSC 12 on the and to a more optimum allocation of such resources. In particular, embodiments of the present invention provide more efficient use of resources on the Agprs interface 20 by dynamically adapting the resource allocation based on at least one of the following:

a) the amount of packet traffic of all the cells controlled by the BSC,

b) the type of traffic handled, especially the Quality of Service (QoS) parameters of the traffic. "Quality of service parameter (or requirement)" is a broad term which may include any or several of the following non-limiting list:

i) priorities. Users may subscribe to different priorities, e.g. a gold, silver or bronze subscription. These priorities are set by the network operator. Each one of these subscriptions will be associated with a certain priority or ranking of access to the system. Subscribers with a gold subscription will receive preferential treatment compared with silver or bronze subscribers. Silver will receive preferential treatment with respect to bronze subscribers. The actual effect of the preferential treatment may be made variable depending upon a time factor and/or a location, factor for instance. Time of day factors may involve access privileges during peak usage times. Time of week privileges may differ at weekends. The privileges may also be dependent upon the location, e.g. urban compared to sub-urban or rural. Time factors and location factors may be combined to form further sub-classes of service. The privileges and access priorities may also be made dependent upon system loading, that is they may change dynamically with system loading. So for instance gold subscribers may be given preferential access even when system loadings are high, whereas bronze subscribers may be denied access under the same circumstances. Priorities are generally freely settable by the operator as part of a marketing strategy.

ii) speech/conversational service usually requiring stringent delay requirements, hence defining a high priority,

iii) messaging service usually being delay insensitive,

iv) streaming data service usually being not so severely delay sensitive as the conversational service but still requiring a strict delay maximum. Bitrate should also be guaranteed if real-time rate of receipt and playback is to be guaranteed.

v) interactive service in which a maximum query response time should preferably be guaranteed,

vi) background service. Generally not delay sensitive involving downloads or time insensitive data such as the Short Message Service.

vii) Combinations of the above. So for instance gold streaming may have a different QoS than silver streaming and these may differ depending upon time, e.g. time of day, and/or location, e.g. rural or urban.

The above list is non-limiting. Other QoS parameters may be, for instance, minimum bandwidth, bit error rate, block error rate, symbol error rate, frame error rate, call blocking rate, connection time, packet delay time. Each specific QoS can be converted or can be assigned a factor which will be used in accordance with the present invention to weight cell loadings as part of a decision making algorithm. These factors may be selected arbitrarily by the system operator. Alternatively, these factors may be related to a traffic capacity factor by estimating the reduction in capacity of the system necessary to guarantee the particular QoS. For example, where a specific delay is to be met, simulations of stochastically based traffic loadings can be used to derive an effective capacity reduction which, when implemented in a specific mobile telecommunications system, will provide the required service within a certain probability. A function of this reduction, e.g. the inverse of this reduction may then be taken as a suitable weighting factor - from which the more severe the reduction needs to be in order to guarantee the QoS, the larger is the factor. Instead of using a simulation, or in addition thereto, practically determined values may be used to determine the factor most suitable to represent the weighting for a specific QoS. Hence, in accordance with the present invention each QoS parameter relevant to a communication is converted into a QoS factor appropriate for each parameter based on the system to which the present invention is to be applied and/or the operators business plan. This factor is preferably used in conjunction with cell traffic loadings in order to weight these and hence to obtain a realistic decision value which can be used for decision making and resource allocation on the Agprs interface. An aim of the present invention is to reduce any oversizing of the link between the PCU and BSC. An interface such as the Agprs interface is a multi-user interface and the various user transmissions are isolated from each other by any of a variety of well known techniques, especially multiplexing techniques, such as Time Division Multiplex, Frequency Division (FDM) or Wavelength Division Multiplex (WDM), Code Division Multiplex (CDM). Whichever technique is used the resources on the Agprs interface are limited, e.g, in TDM by the number of timeslots, in FDM by the number of frequencies, in CDM the number of simultaneous codes which can be used before the interference induced error rate exceeds a maximum allowable value. Typically, time division multiplexing (TDM) is used on the Agprs interface, e.g. a PCM (Pulse Code Modulated) link. In the following the invention will be described with respect to TDM but it should be understood that the present invention is not limited thereto and that any suitable multiplexing method may be used. Such a TDM link divides the transmission channel into a series of time slots. According to the present invention, the resources on the Agprs interface, i.e. the timeslots, are allocated dynamically depending upon the loads required for the cells. Preferably, QoS parameters of the traffic are also included in the resource optimization algorithm. In order to optimize the use of these resources an objective function is preferably optimized. This function is preferably based on the Agprs cell loads weighted by relevant QoS factors.

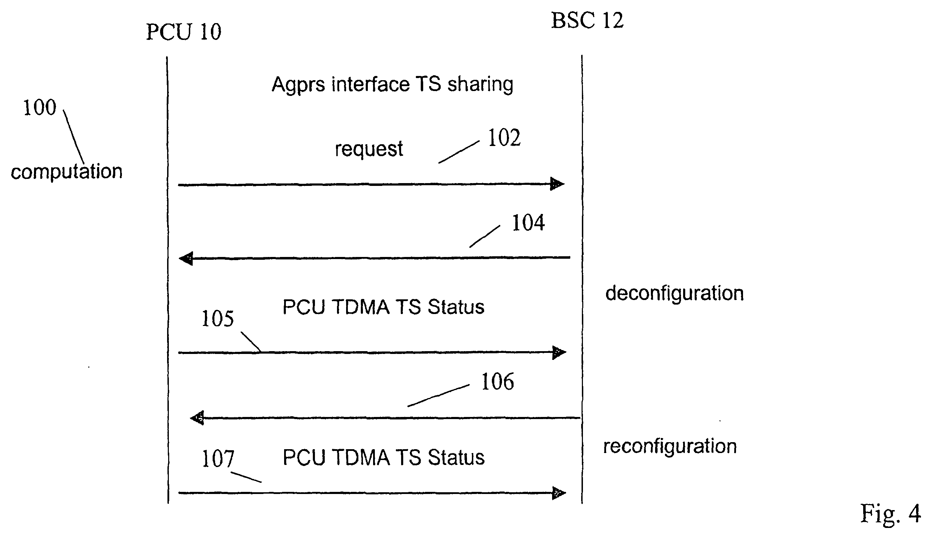

A message flow in accordance with an embodiment of the present invention is shown in Fig. 4. In step 100 The PCU 10 determines the traffic load for each cell and compares the loads with the existing resource allocation on the interface 20. In accordance with a decision algorithm the PCU 10 decides whether a reallocation would be advisable. If it is decided to reallocate resources a reallocation request is sent to the BSC 12 from the PCU 10 in step 102. Alternatively, another network element may make these calculations and transmit the results to the PCU. On receipt of the request, the BSC 12 carries out a reallocation procedure which may advantageously comprise a deconfiguration message exchange 104, 105 and a reconfiguration message exchange 106, 107.

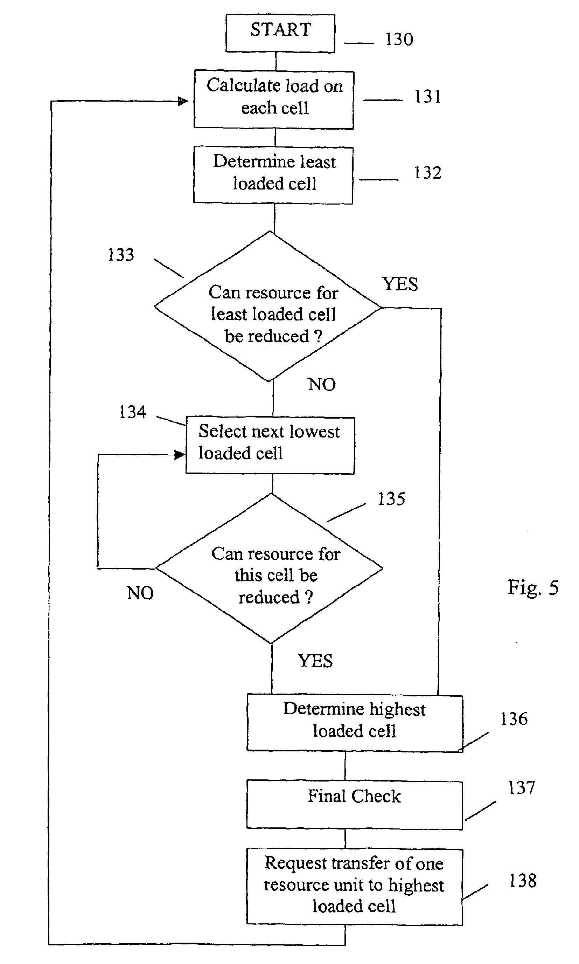

In one aspect of the present invention an adjustment of the resource allocation is limited to a defined amount of resource change. For instance, only one timeslot (or frequency, wavelength, code = one unit of resource on the interface 20) may change its allocation in one reallocation procedure. In this way the reallocation of resources is prevented from large and rapid oscillations resulting in instability. In general, one unit of resource will be transferred from a less loaded cell to a more loaded cell. Preferred, is a transfer of one unit of resource from a less loaded cell to the most loaded cell. A still more preferred embodiment is to transfer one unit of resource from the least loaded cell to the most loaded cell. A decision algorithm in accordance with an embodiment of the present invention is shown in Fig. 5.

One aspect of the present invention includes calculating the cell load based on the peak throughput for each cell (step 131). The "throughput" as used below means the data rate for a particular mobile terminal or cell, i.e. the transmission capacity. "Load" means the transmission capacity per unit resource (timeslot, frequency, code) on the interface 20. Rather than use only the peak load for a cell, a more advantageous embodiment of the present invention uses the peak transmission capacities (throughputs) weighted with the relevant QoS factors which have been derived as explained above. Hence, a modified cell load value is obtained by calculating a function of the peak throughputs and the QoS factor(s). The function may be a simple weighting as indicated in Eq. 1:

Cell Load, C = Σ [(peak throughput of first mobile terminal transmission in cell 18 x QoS factor for this traffic) + (peak throughput of second mobile terminal transmission in cell 18 x QoS factor for this traffic) ……..] divided by the number of resource units (L) allocated for this cell on interface 20.  Eq. 1

The sum is over all mobile terminals handled by the interface 20 for cell 18. The PCU is in the position to calculate peak throughput as the PCU is aware of the number of mobile terminals communicating with a BTS as well as the bandwidth required for each communication. From this information the peak throughput can be determined for each communicating (active) mobile terminal. This cell load is then derived by dividing the peak transmission capacity weighted by the QoS factors by the number of resource units (e.g. time slots) allocated to this cell on interface 20.

To avoid oscillatory and unstable behavior the value C may be filtered further, for example by taking into account of a forgetting factor. For example, the current value of C may be modified by the values of C from previous time periods. Hence, a filtered and modified cell load $C_{actual}$ may be a function of the current cell load (or current modified cell load, $C_{T=0}$) and the cell loads (or modified cell loads, ($C_{T=1}$)) at previous time periods. An example may be:

$$C_{actual} = \alpha \, C_{T=0} + (1-\alpha) \, C_{T=-1} \, \ldots\ldots\ldots \qquad Eq. \; 2$$

where $C_{T=0}$ is the current cell load weighted by the current QoS factor(s) and $C_{T=-1}$ is the cell load at one time period in the past weighted by the QoS factor(s) at that time and $\alpha$ is a constant less than 1 known as a forgetting factor. The filtering effect is similar to that of a low pass filter.

The maximally loaded cell is that having the largest value of $C_{actual}$, that is the cell with the largest peak transmission capacity divided by the number of timeslots allocated on interface 20 (step 136). It is to this cell that one resource unit will be transferred if the decision algorithm indicates this would be advisable (step 137). In case there are two or mode cells with exactly the same cell load after the above calculations additional criteria may be used to decide which cell to select, e.g. the cell with the maximum peak transmission capacity, the cell with the most gold subscribers using active mobile terminals, etc.

An alternative algorithm determines the maximally loaded cell by calculating the peak load assuming an increase of one resource unit on the interface 20 - i.e. the peak load criterion is based on the result after one timeslot has been allocated to each cell instead of using only the current peak load based on the current number of slots allocated to the cell. This simulates the result of allocating one timeslot to each cell. The way this affects the decision can be explained based on a simple example. Assume that for a first cell the peak transmission capacity is 4 and 2 timeslots are allocated. For a second cell the peak transmission capacity is 8 and 4 timeslots are allocated. In both cases the peak load is 2 units of transmission capacity per timeslot. However, if the situation is considered when 1 timeslot is added the peak load for the first cell is 1.33 and the peak load for the second cell is 1.6. In this case the alternative algorithm selects the cell with the largest number of presently allocated timeslots (for which an addition of one extra timeslot has the least effect).

The eligibility criterion for the cell from which a unit of resource will be transferred can be determined based on the least loaded cell (step 132). This can be determined by using the minimum value of $C_{actual}$. An improved algorithm uses a slightly different algorithm for selection of the minimally loaded cell. In this case, the minimally loaded cell is determined under the assumption that one time slot is removed from that cell, i.e. $C_{actual}$ is determined by dividing the peak transmission capacity by the amount of resources (e.g. time slots, frequencies, codes) allocated to this cell on interface 20 minus one unit of resource (= $C^{-1}_{actual}$). The reason for this can be explained with reference to a simple example. Let us assume that a first cell has a peak load of 7.5 arbitrary units and 3 time slots are allocated - the ratio is then 2.5. A second cell has a peak load of 4 units and 2 timeslots allocated - a ratio of 2. In this case the second cell is apparently loaded less. However, if the situation is determined after transfer of one timeslot the order of the cells changes - the first has a ratio of 7.5/2 = 3.75 and the second has a ratio of 4/1 = 4. It is preferred to take the situation resulting after removal of one resource unit from each cell as the decision criterion. In this way oscillation between least loaded and maximum loaded can be reduced or eliminated.

Additional requirements may need to be considered to guarantee safe operation. For instance, generally, a minimum number of units of resource is allocated on interface 20 for each cell or for each active transmitter unit in a BTS, e.g. one unit is always allocated. This lowest level cannot be reduced further. In addition, and depending on the system used, more units of resource may be allocated to each cell as a minimum as a system operator option. Again, this level may not be reduced further if the operator has specified this number as a minimum. If the lowest loaded cell as determined by the above procedure cannot be reduced further for such reasons, the next least loaded cell is taken (step 133). If this next lowest loaded cell is also at its minimum resource, this procedure is repeated until a cell is found with the lowest cell loading which may be reduced further validly (step 134).

Preferably a final check is made (step 137) before making the request for a new allocation (step 138). These additional precautions can be implemented optionally in the complete decision algorithm. For instance, in the case of an overload, the BSC 12 can ignore the request from the PCU 10. Also, after an overload, the PCU 10 may be prevented from making a request for a further reallocation of resources within a certain time period.

The final check (step 137) may also investigate if oscillation or "hunting" is likely to occur. For instance, the lowest cell load with one resource unit removed is compared with the maximum loaded cell after one resource unit has been added. If the first exceeds or equals the latter there is a danger of oscillation. A simple example will demonstrate this. Assume first to third cells with throughput:timeslot allocations of 8:4; 6:2; 9:3 respectively. If the loads with one timeslot removed are compared then the first cell has the lowest load (8/3 = 3.33 compared with 6/1 = 6 and 9/2 = 4.5).

However, this loading is higher than the load after adding one timeslot to the second or third cell - second cell plus 1 = 6/3 = 2, or third cell plus 1 = 9/4 = 2.25. In this case the first cell would oscillate between lowest and highest loaded within one timeslot allocation. In such a case the PCU may decide not to request a change in allocation.

A further embodiment of the present invention will now be described with reference to EDGE. In accordance with the EDGE standards two types of traffic resources are allocatable on the interface between the BSC 12 and the BTS 14, 16 (the Abis interface). These may be called "main" and "joker" resource units, e.g. timeslots. This use of main and joker timeslots is designed to deal with the different coding schemes available with EDGE. The allocations are shown in table 1.

Table 1

| Modulation scheme designation | Number of joker timeslots used in addition to a main timeslot | Bandwidth kbps |
|---|---|---|
| CS1 | 0 | 16 |
| CS2 | 0 | 16 |
| CS3 | 1 | 32 |
| CS4 | 1 | 32 |
| MCS1 | 0 | 16 |
| MCS2 | 0 | 16 |
| MCS3 | 1 | 32 |
| MCS4 | 1 | 32 |
| MCS5 | 1 | 32 |
| MCS6 | 3 | 48 |
| MCS7 | 4 | 64 |
| MCS8 | 5 | 80 |
| MSC9 | 5 | 80 |

The difference between a main and a joker timeslot is that a joker timeslot can be allocated as required in addition to a main timeslot or a combination of main and joker timeslots in order to provide sufficient capacity for a different modulation scheme. The number of main timeslots allocated to a cell is dependent upon the number of mobile stations transmitting/receiving in the relevant cell, i.e. is related to the number of active transceiver units in the base station of a cell which are required to meet the demand.

This differential use of joker and main resource units on interface 20 requires a more sophisticated decision algorithm. In accordance with an embodiment of the present invention a revised calculation method is used to determine the modified cell load. In this case Eq. 1 is modified so that the modified cell load is the sum of the minimum value of either the peak throughput multiplied by the QoS factor or the target coding scheme bit rate (see table 1 for coding schemes) times the number of unit resources (timeslots) allocated to that coding scheme (see table 1 above for the number of timeslots for each coding scheme). Thus, equation 1 becomes:

$$\text{Cell Load, C} = \Sigma \left[\min \text{(peak throughput of a first mobile terminal of cell 18 x}\right.$$

QoS factor for this traffic OR target coding scheme bitrate x number of timeslots for the

coding scheme for the first mobile terminal x QoS factor for this traffic) + min(peak

throughput of a second mobile terminal of cell 18 x QoS factor for this traffic OR target

coding scheme bitrate x number of timeslots for the coding scheme for the second

mobile terminal x QoS factor for this traffic) ........] divided by the number of resource

units allocated to this cell on interface 20.                                       Eq. 3

The sum is calculated over all the active mobile terminals of cell 18 handled by the interface 20. The reason for this form of the calculation is that the load can be restricted either by the peak transmission capacity or by the available load which can be transmitted through the system. Either of these can be the smaller.

The filtering of this modified cell load to obtain the filtered and modified cell load $C_{actual}$ may be calculated in accordance with equation 2.

The selection of the least loaded cell and the maximum loaded cell can be as for the first embodiment.

The action to be taken by the PCU 10 and the BSC 12 is also modified by the dual type of resources - joker and main resource units. The allocation or de-allocation of joker timeslots can be performed by the PCU 10 whereas the same activity for the main timeslots can be performed by the BSC. The reason for this is that main timeslots are closely associated with the allocation of transceiver units in the base stations, i.e. to meet demand within the cells. This activity is closely linked to BSC responsibilities.

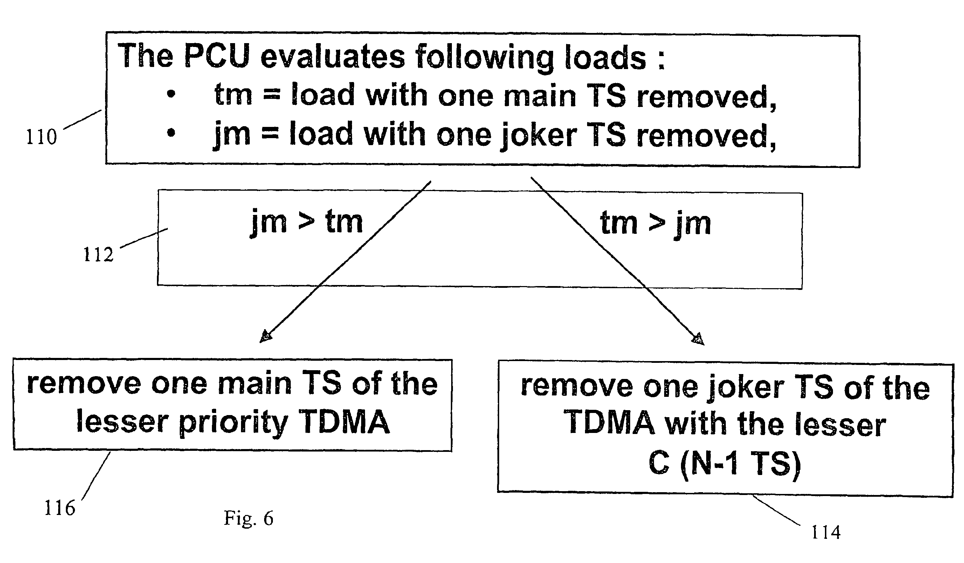

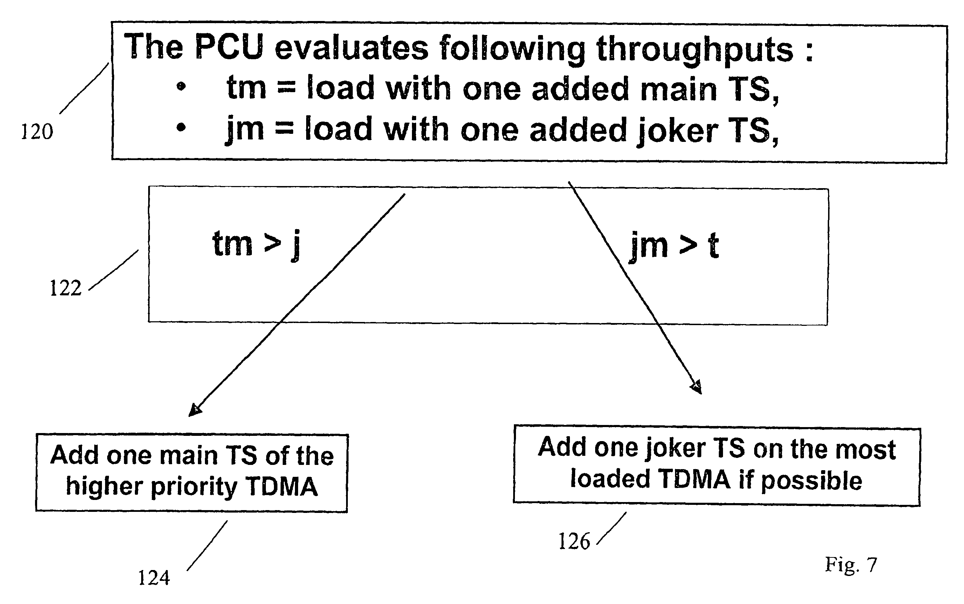

A further embodiment of the present invention will be described with reference to Figs. 6 and 7. Figure 6 shows the decision algorithm for selecting the least loaded cell and whether a joker or a main timeslot is to be added. In step 110 the PCU 10 evaluates two terms:

$t_m$ which is the cell load if one main time resource unit would be removed on the interface 20, and
$j_m$ which is the cell load if one joker resource unit would be removed on the
interface 20.

In step 112 it is determined if $t_m$ is greater than $j_m$. If YES, then the joker timeslots are least loaded and therefore the PCU 10 requests that one joker time slot is removed and provided for a heavily loaded cell in step 114. Preferably, a decision is taken as to which of the active mobile terminals of the cell looses the resource unit, e.g. the traffic of the transceiver unit is selected which has the lowest load or alternatively, the lowest load when calculated with the current resource unit allocation minus one resource unit. If NO, then the main time slots are least loaded and the PCU 10 requests that a main slot is removed and added to another cell in step 116. Preferably, the BSC selects which of the active mobile terminals of a cell loses the one resource unit based on the priority rating of the transmission, e.g. gold, silver or bronze. In this case the bronze subscriber would lose the resource unit.

Fig. 7 shows the decision algorithm for selecting the actions once the most loaded cell has been determined. In step 120 the PCU 10 evaluates two terms:

$t_m$ which is the cell load if one main time slot were added, and
$j_m$ which is the cell load if one joker time slot would be added.

In step 122 it is determined if $t_m$ is greater than $j_m$. If YES, then the main timeslots are most loaded and therefore the PCU 10 requests that one main time slot is added in step 124. The addition can be made to the mobile terminal having the highest priority. If NO, then the joker time slots are most loaded and the PCU 10 requests that a joker timeslot is added in step 126. The most loaded mobile terminal may be selected for the addition.

**Claims**

1.  A mobile cellular radio telecommunications network comprising:

a base station controller (12) for controlling at least a first and a second base station (14, 16), each base station (14,16) including at least one radio transceiver wirelessly communicating with user terminals; a packet controller (10), an interface (20) located between the base station controller (12) and the packet controller (10) over which packet data is passed between user terminals and a data network, **characterised in that** the network further comprises

a resource control means for dynamically controlling the provision of traffic resources across the interface (20) in accordance with loads on the first and second base stations (14,16);

means for allocating resources for transferring data packets across the interface (20) in accordance with the determined allocation of resources, and

means for determining the traffic load on the first and second base stations and for providing the resource control means with this information.

2. The network according to claim 1, wherein the resource control means is located in the base station controller (12) or partly in the base station controller (12) and partly in the packet controller (10).

3. The network according to any previous claim, wherein the load determining means is located in the packet controller (10).

4. The network according to any previous claim, wherein the resource control means include means for controlling the resources on the interface based on a Quality of Service (QoS) parameter.

5. The network according to any previous claim, wherein the first base station (14) is located in a first cell (18) and the second base station (16) is located in a second cell (19).

6. A method to dynamically provide resources on an interface (20) located between a base station controller (12) and a packet controller (10) in a mobile cellular radio telecommunications network, the network comprising the packet controller (10) connected via the interface (20) to the base station controller (12);

the base station controller (12) controlling at least a first and a second base station (14, 16), each base station (14,16) including at least one radio transceiver wirelessly communicating with the user terminals; the network being used for switching packet data between user terminals and a data network;

the method comprising the steps of:

determining the degree of traffic load on the first and second base stations (14, 16); dynamically controlling the provision of traffic resources across the interface (20) based on the determined degree of traffic load on the first and second base stations (14, 16); and

providing resources for transferring data packets across the interface (20) in accordance with the determined allocation of resources.

7. The method according to claim 7, wherein controlling the provision of resources on the interface is based on a Quality of Service (QoS) parameter.

8. A packet controller (10) adapted for use in a mobile cellular radio telecommunications network according to any of claims 1 to 6 and for use in performing the method according to claim 6 or 7.

9. A base station controller (12) for use in a mobile cellular radio telecommunications network according to any of the claims 1 to 6 and for use in carrying out the method according to claim 6 or 7.

**Revendications**

1. Réseau de télécommunications radio cellulaire mobile comprenant :

une unité de commande de station de base (12) pour commander au moins une première et une seconde station de base (14, 16), chaque station de base (14, 16) comprenant au moins un émetteur-récepteur radio communiquant sans fil avec des terminaux d'utilisateur ; une unité de commande de paquet (10), une interface (20) située entre l'unité de commande de station de base (12) et l'unité de commande de paquet (10) sur laquelle on passe des données de paquet entre des terminaux d'utilisateur et un réseau de données, **caractérisé en ce que** le réseau comprend de plus :

un moyen de commande de ressource pour commander de façon dynamique la fourniture de ressources de trafic sur l'interface (20) selon les charges sur les première et seconde stations de base (14, 16) ;
un moyen pour attribuer des ressources pour transférer les paquets de données sur l'interface (20) selon l'attribution déterminée des ressources, et
un moyen pour déterminer la charge de trafic sur les première et seconde stations de base et pour procurer ces informations au moyen de commande de ressource.

2. Réseau selon la revendication 1, dans lequel le moyen de commande de ressource est situé dans l'unité de commande de station de base (12) ou en partie dans l'unité de commande de station de base (12) et en partie dans l'unité de commande de paquet (10).

3. Réseau selon l'une quelconque des revendications précédentes, dans lequel le moyen de détermination de charge est situé dans l'unité de commande de paquet (10).

4. Réseau selon l'une quelconque des revendications précédentes, dans lequel le moyen de commande de ressource comprend un moyen pour commander les ressources sur l'interface sur la base d'un paramètre de Qualité de Service (QoS).

5. Réseau selon l'une quelconque des revendications précédentes, dans lequel la première station de base (14) est située dans une première cellule (18) et la seconde station de base (16) est située dans une seconde cellule (19).

6. Procédé pour procurer de façon dynamique des ressources sur une interface (20) située entre une unité de commande de station de base (12) et une unité de commande de paquet (10) dans un réseau de télécommunications radio cellulaire mobile, le réseau comprenant l'unité de commande de paquet (10) reliée par l'intermédiaire de l'interface (20) à l'unité de commande de station de base (12) ;
l'unité de commande de station de base (12) commandant au moins une première et une seconde station de base (14, 16), chaque station de base (14, 16) comprenant au moins un émetteur-récepteur radio communiquant sans fil avec les terminaux d'utilisateur ; le réseau étant utilisé pour commuter des données de paquet entre des terminaux d'utilisateur et un réseau de données ;
le procédé comprenant les étapes consistant à :

déterminer le degré de charge de trafic sur les première et seconde stations de base (14, 16) ;
commander de façon dynamique la fourniture de ressources de trafic sur l'interface (20) sur la base du degré déterminé de charge de trafic sur les première et seconde stations de base (14, 16) ; et
procurer des ressources pour transférer des paquets de données sur l'interface (20) selon l'attribution déterminée de ressources.

7. Procédé selon la revendication 7, dans lequel la commande de la fourniture de ressources sur l'interface est basée sur le paramètre de Qualité de Service (QoS).

8. Unité de commande de paquet (10) conçue pour une utilisation dans un réseau de télécommunications radio cellulaire mobile selon l'une quelconque des revendications 1 à 6 et pour une utilisation dans l'exécution du procédé selon la revendication 6 ou 7.

9. Unité de commande de station de base (12) pour une utilisation dans un réseau de télécommunications radio cellulaire mobile selon l'une quelconque des revendications 1 à 6 et pour une utilisation dans l'exécution du procédé selon la revendication 6 ou 7.

**Patentansprüche**

1. Mobiles zellenartiges Funktelekommunikationsnetzwerk mit:

einer Basisstation-Steuerung (12) zum Steuern mindestens einer ersten und einer zweiten Basisstation (14, 16), wobei jede Basisstation (14, 16) mindestens einen Funktransceiver beinhaltet, welcher drahtlos mit Benutzerterminals kommuniziert,
einer Paketsteuerung (10),
einer Schnittstelle (20), welche zwischen der Basisstation-Steuerung (12) und der Paketsteuerung (10) angeordnet ist, über welche Datenpakete zwischen Benutzerterminals und einem Datennetzwerk geleitet werden, **dadurch gekennzeichnet,**
**dass** das Netzwerk ferner aufweist:

eine Ressourcen-Steuereinrichtung zum dynamischen Steuern der Bereitstellung von Übertragungsressourcen über die Schnittstelle (20) in Übereinstimmung mit einer Last der ersten und zweiten Basisstation (14, 16),
eine Einrichtung zum Zuordnen von Ressourcen zum Übertragen von Datenpaketen über die Schnittstelle (20) in Übereinstimmung mit der vorbestimmten Zuordnung von Ressourcen und
eine Einrichtung zum Bestimmen der Übertragungslast der ersten und zweiten Basisstation und zum Versorgen der Ressourcen-Steuereinrichtung mit dieser Information.

2. Netzwerk nach Anspruch 1, wobei die Ressourcen-Steuereinrichtung in der Basisstation-Steuerung (12) oder teilweise in der Basisstation-Steuerung (12) und teilweise in der Paketsteuerung (10) angeordnet ist.

3. Netzwerk nach einem der vorhergehenden Ansprüche, wobei die lastbestimmende Einrichtung in der Paketsteuerung (10) angeordnet ist.

4. Netzwerk nach einem der vorhergehenden Ansprüche, wobei die Ressourcen-Steuereinrichtung eine Einrichtung zum Steuern der Ressourcen der Schnittstelle basierend auf einem Dienstqualitäts- (QoS) Parameter beinhaltet.

5. Netzwerk nach einem der vorhergehenden Ansprüche, wobei die erste Basisstation (14) in einer ersten Zelle (18) und die zweite Basisstation (16) in einer zweiten Zelle (19) angeordnet ist.

6. Verfahren zum dynamischen Bereitstellen von Ressourcen an einer Schnittstelle (20), welche zwischen einer Basisstation-Steuerung (12) und einer Paketsteuerung (10) in einem mobilen zellenartigen Funktelekommunikationsnetzwerk angeordnet ist, wobei das Netzwerk die Paketsteuerung (10) beinhaltet, welche über die Schnittstelle (20) mit der Basisstation-Steuerung (12) verbunden ist, wobei die Basisstation-Steuerung (12) mindestens eine erste und eine zweite Basisstation (14, 16) steuert, wobei jede Basisstation (14, 16) mindestens einen Radiotransceiver beinhaltet, welcher drahtlos mit den Benutzerterminals kommuniziert, wobei das Netzwerk zum Datenpaketschalten zwischen Benutzerterminals und einem Datennetzwerk verwendet wird,
das Verfahren beinhaltet die Schritte:

Bestimmen des Drahtes der Übertragungslast an der ersten und zweiten Basisstation (14, 16),
dynamisches Steuern der Bereitstellung von Übertragungsressourcen über die Schnittstelle (20) basierend auf dem bestimmten Grad der Übertragungslast der ersten und zweiten Basisstation (14, 16), und
Bereitstellen von Ressourcen zum Übertragen von Datenpaketen über die Schnittstelle (20) in Übereinstimmung mit der bestimmten Ressourcenzuordnung.

7. Verfahren nach Anspruch 7, wobei das Steuern der Bereitstellung von Ressourcen an der Schnittstelle auf einem Dienstqualitäts- (QoS) Parameter basiert.

8. Paketsteuerung (10), welche zur Verwendung in einem mobilen zellenartigen Funktelekommunikationsnetzwerk gemäß einem der Ansprüche 1 bis 6 eingerichtet ist und für eine Verwendung zum Durchführen des Verfahrens gemäß einem der Ansprüche 6 oder 7.

9. Basisstation-Steuerung (12) zur Verwendung in einem mobilen zellenartigen Funktelekommunikationsnetzwerk gemäß einem der Ansprüche 1 bis 6 und zur Verwendung zum Durchführen des Verfahrens gemäß einem der Ansprüche 6 oder 7.

Fig. 1

——  Signaling interface

——  Signaling and data transfer interface

EP 1 282 324 B1

Fig. 2

13

Fig. 3

EP 1 282 324 B1

PCU 10                          BSC 12

Agprs interface TS sharing

100

computation

request     102

104

PCU TDMA TS Status     deconfiguration

105

106

reconfiguration

107    PCU TDMA TS Status

Fig. 4

```
        ┌──────────┐
        │  START   │ ── 130
        └──────────┘
              │
        ┌──────────────┐
        │Calculate load on│ ── 131
        │   each cell   │
        └──────────────┘
              │
        ┌──────────────┐
        │Determine least│ ── 132
        │  loaded cell  │
        └──────────────┘
              │
    133          ╱╲
        ╱ Can resource for ╲   YES
       ╱  least loaded cell  ╲──────┐
       ╲    be reduced ?     ╱      │
        ╲                   ╱       │
              │ NO                  │
    134  ┌──────────────┐          │
         │Select next lowest│       │
         │  loaded cell   │        │
         └──────────────┘         │
              │           135      │
             ╱╲                    │
       ╱  Can resource for ╲       │
      ╱   this cell be      ╲      │
      ╲    reduced ?        ╱      │
   NO  ╲                   ╱       │
              │ YES                │
        ┌──────────────┐          │
        │Determine highest│ ── 136 │
        │  loaded cell   │◄────────┘
        └──────────────┘
              │
        ┌──────────────┐
        │  Final Check  │ ── 137
        └──────────────┘
              │
        ┌──────────────┐
        │Request transfer of one│ ── 138
        │resource unit to highest│
        │  loaded cell   │
        └──────────────┘
```

Fig. 5

The PCU evaluates following loads :
- tm = load with one main TS removed,
- jm = load with one joker TS removed,

110

jm > tm                    tm > jm

112

remove one main TS of the
lesser priority TDMA

116

Fig. 6

remove one joker TS of the
TDMA with the lesser
C (N-1 TS)

114

EP 1 282 324 B1

The PCU evaluates following throughputs :
- tm = load with one added main TS,
- jm = load with one added joker TS,

120

122

tm > j

jm > t

Add one main TS of the higher priority TDMA

124

Add one joker TS on the most loaded TDMA if possible

126

Fig. 7

EP 1 282 324 B1